(19) Europäisches Patentamt
European Patent Office
Office européen des brevets

(11) **EP 4 187 557 A1**

(12) **EUROPEAN PATENT APPLICATION**

(43) Date of publication:
**31.05.2023 Bulletin 2023/22**

(21) Application number: **22210149.5**

(22) Date of filing: **29.11.2022**

(51) International Patent Classification (IPC):
*H01B 11/06* (2006.01)   *H01B 7/29* (2006.01)

(52) Cooperative Patent Classification (CPC):
**H01B 11/06; H01B 7/292**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 US 202163284462 P**

(71) Applicants:
• **Airbus Operations Limited
Bristol BS34 7PA (GB)**
• **Airbus Opérations SAS
31060 Toulouse (FR)**

(72) Inventors:
• **DA CUNHA, Mauricio Pereira
Orono, 04473 (US)**
• **LAD, Robert.J.
Orono, 04473 (US)**
• **WHITE, Ian
Bristol, BS34 7PA (GB)**
• **BRUGGEMANN, Kurt
Bristol, BS34 7PA (GB)**
• **DOWNING, Richard
Bristol, BS34 7PA (GB)**
• **CONSOLA, Maud
Bristol, BS34 7PA (GB)**

(74) Representative: **EIP
Fairfax House
15 Fulwood Place
London WC1V 6HU (GB)**

(54) **CABLE STRUCTURE FOR USE IN AIRCRAFT WHEEL BRAKES**

(57) Disclosed is a cable structure to carry signals to and from a component of a temperature sensing arrangement in an aircraft wheel brake, the cable structure comprising elongate elements including a plurality of cables and/or wires, one or more ceramic spacer layers, a ceramic cover layer and a metallic layer surrounding the one or more ceramic spacer layers and the ceramic cover layer. Also disclosed is an aircraft wheel brake comprising the cable structure and an aircraft comprising the aircraft wheel brake.

Figure 6

**Description**

TECHNICAL FIELD

The present invention relates components for use in harsh temperature environments on an aircraft.

BACKGROUND

An aircraft may comprise harsh environments which, for example, experience very high temperatures. For example, the wheel brakes of an aircraft may reach very high temperatures during braking. It may be desired to provide electronic components such as temperature sensors in such environments.

SUMMARY

A first aspect of the present invention provides a cable structure to carry signals to and from a component of a temperature sensing arrangement in an aircraft wheel brake, the cable structure comprising elongate elements including a plurality of cables and/or wires, one or more ceramic spacer layers, a ceramic cover layer and a metallic layer surrounding the one or more ceramic spacer layers and the ceramic cover layer.

Optionally, a cross section of the ceramic cover layer is an arc; and the metallic layer is configured to hold the one or more ceramic spacer layers and the ceramic cover layer.

Optionally, a cross section of the ceramic cover layer is a circle.

Optionally, the one or more ceramic spacer layers separate one or more of the plurality of wires and/or cables from the remainder of the plurality of wires and/or cables.

Optionally, the cable structure is for providing thermal protection to the plurality of cables and/or wires.

According to a second aspect of the present invention, there is provided an aircraft wheel brake comprising the cable structure according to the first aspect.

Optionally, in the aircraft wheel brake according to the second aspect, the cable structure is electrically coupled to a wireless relay device for wirelessly transmitting an interrogation signal to a temperature sensing device and wirelessly receiving an output signal from the temperature sensing device.

According to a third aspect of the present invention, there is provided an aircraft comprising the aircraft wheel brake according to the second aspect.

BRIEF DESCRIPTION OF THE DRAWINGS

Embodiments of the invention will now be described, by way of example only, with reference to the accompanying drawings, in which:

Figure 1 is a simplified schematic view of an aircraft on which examples may be deployed;

Figure 2 is a simplified schematic view of a brake and a wheel of an aircraft landing gear assembly according to an example;

Figure 3 is a simplified schematic block diagram of a temperature sensing device according to a first example;

Figure 4 is a simplified schematic plan view of a surface acoustic wave sensor element, according to an example;

Figure 5 is a simplified schematic block diagram of a temperature sensing system according to an example;

Figure 6 is a simplified schematic cross-sectional view of a cover for a plurality of wires and/or cables, according to a first example; and

Figure 7 is a simplified schematic cross-sectional view of a cover for a plurality of wires and/or cables, according to a second example.

DETAILED DESCRIPTION

The following disclosure relates to a temperature sensing device for sensing aircraft wheel brake temperature.

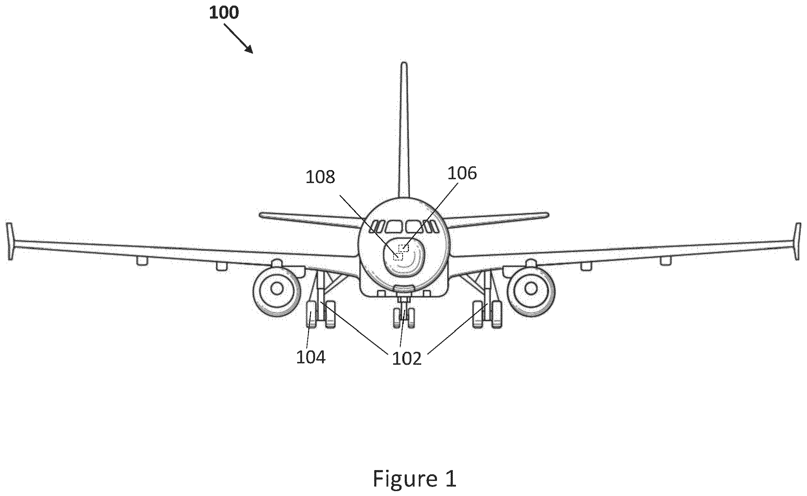

Figure 1 is a simplified schematic view of an aircraft 100. The aircraft 100 comprises a plurality of landing gear assemblies 102. The landing gear assemblies may include main and nose landing gears that are deployed or extended during take-off and landing. Each landing gear assembly 102 includes wheels 104. The aircraft 100 comprises a computing system 106, which, for example, comprises one or more processors and one or more computer readable storage media. The aircraft 100 may also comprise instruments 108, such as instruments or sensors for measuring characteristics or parameters related to the aircraft, and instruments or sensors for measuring environmental characteristics.

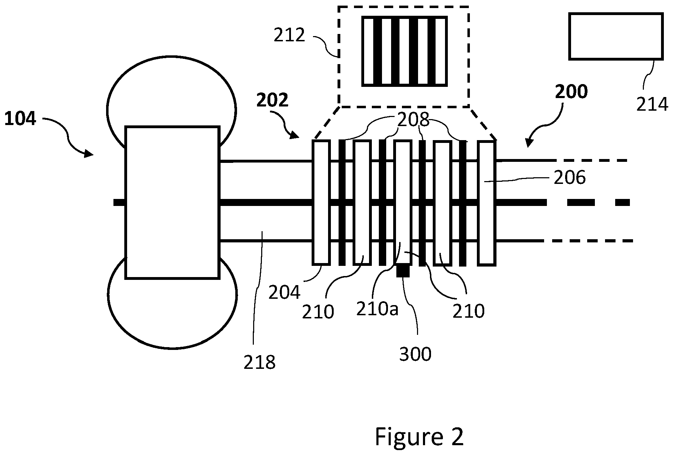

Figure 2 is a simplified schematic view of an aircraft wheel brake 200 associated with the wheel 104 of the aircraft 100. The wheel brake 200 applies a braking force to inhibit the rotation of the wheel 104 when applied. Each of the wheels of the aircraft 100 may have a wheel brake 200 associated with it. In this example, the wheel brake 200 comprises a plurality of brake discs 202 including a pressure plate 204, a reaction plate 206, and a number of rotors 208 and stators 210. In this example, the brake discs 202 include a plurality of rotors and stators, and the wheel brake 200 is therefore a multiple disc brake. In other examples, the wheel brake 200 may not be a multiple-disc brake: there may be only one disc 208, for example, between a pressure plate 204 and a reaction plate 206. In some examples, the brake discs 202 may include up to 9 discs or 11 discs, or any other number which is suitable for a wheel brake of an aircraft. The brake discs 202 may collectively be referred to as a heat pack. The components of the wheel brake 200 (hereafter, for brevity, the wheel brake 200 is referred to simply as the brake 200) such as the brake discs 202 may be housed in a wheel brake housing (not shown). As referred to herein, the term brake is used as if to include such a wheel brake housing.

It will be understood that the type of wheel brake used in an aircraft landing gear depends on the characteristics of the aircraft in question, such as size, carrying capacity and the like. The following may be applied to any wheel brakes suitable for use as aircraft wheel brakes which heat up when applied to reduce aircraft speed, as discussed in the following.

When the aircraft 100 travels along the ground supported by the landing gear assembly 102, the rotors rotate with the wheel 104 (the rotors are keyed to the wheel 104), whereas the stators, the pressure plate 204 and the reaction plate 206 do not rotate with the wheel 104 (the stators, the pressure plate 204 and the reaction plate 206 are keyed to a torque tube 218 associated with the wheel 104 which does not rotate with the wheel 104). When braking is applied, the pressure plate 204 is urged towards the reaction plate 206 so that the brake discs 202 come into contact with one another (as shown in box 212 of Figure 2) and friction acts to inhibit the rotational motion of the rotors, thus generating a braking force. When the brake 200 is applied, some of the kinetic energy of the aircraft 100 is absorbed into the brake discs 202 as heat (by the action of friction). Accordingly, the brake 200 heats up when it is applied to cause the aircraft 100 to slow down.

Any one or more of the rotors, stators, pressure plate 204 and the reaction plate 206 may be composed of Carbon-Carbon (CC) composites. A brake including brake discs composed of CC composites may be referred to as a carbon brake. For example, the brake discs 202 may be composed of a graphite matrix reinforced by carbon fibers.

Those skilled in the art will appreciate that the environment of the brake discs 202 may be harsh due to vibration and/or physical shock during application of braking for example. The environment of the brake discs 202 may be harsh due to high temperatures reached by the brake discs 202, for example.

In this example, the aircraft 100 comprises a braking system 214 which controls the operation of the brake 200. The braking system 214 causes the brake 200 to be applied in response to a braking request (for example when a pilot of the aircraft 100 presses a brake pedal). For example, the brake 200 may be hydraulically actuated in which case the braking system 214 includes a hydraulic system (not shown) operationally connected with the brake 200. In other examples, the brake 200 may be electrically actuated in which case the braking system 214 includes an electronic brake actuation system. The braking system 214 may be controlled by the computing system 106.

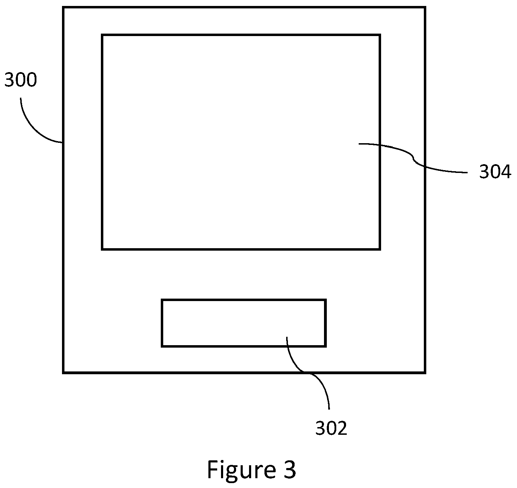

Figure 3 is a simplified schematic view of a temperature sensing device 300. The temperature sensing device 300 is for sensing aircraft wheel brake temperature (for example, the temperature of the brake 200). For example, the temperature sensing device 300 may be attached to a component of the brake in order to sense the temperature of that component of the brake 200. For example, the temperature sensing device 300 may be attached to one of the brake discs 202. In the example of Figure 2, the temperature sensing device 300 is attached to one of the stators. For example, the temperature sensing device 300 is attached to a first stator 210a, as schematically shown.

The temperature sensing device 300 may be attached to the first stator 210a in a manner that can withstand the high temperatures expected to occur at the first stator 210a. For example, the temperature sensing device 300 may be attached to the first stator 210a by means of a ceramic adhesive. Ceramic adhesive may be intended to withstand high temperatures, for example in excess of 1000°C. For example, the ceramic adhesive may be applied between the first stator 210a and the temperature sensing device 300 and cured such that the temperature sensing device 300 is bonded to the first stator 210a using cured ceramic adhesive material (for example, ceramic epoxy adhesive material). In some examples, the first stator 210a comprises a first formation (for example, one or more grooves). The first formation may be formed by cutting, grinding, drilling, or boring the first formation into the material of the first stator 210a. In such examples, a second formation may be formed from the ceramic adhesive to interlock with the first formation. For example, the ceramic adhesive with the second formation may be an attachment element for attaching the temperature sensing device 300 to the first stator 210a. For example, the second formation is complementary to the first formation. For example, the first formation is a groove formed in the first stator 210a and the second formation is a spike which fits into the groove to inhibit movement between the first stator 210a the attachment element along an axial direction and a circumferential direction of the first stator 210a. In some examples, providing the attachment element as described comprises applying uncured ceramic adhesive material to the surface of the first formation to create the second formation.

It will be appreciated that the temperature sensing device 300 may be attached to a brake disc in a number of ways. Alternatively, or in addition to the use of ceramic adhesive, other fasteners such as ceramic bolts may be used to attach the temperature sensing device 300. For example, a ceramic bolt may be passed through a through hole in the temperature sensing device 300 and engage with a threaded hole in the first stator 210a. In some examples, an appropriately shaped clip (for example, a metal clip) may be used as an attachment element. For example, the clip may comprise through holes and may be attached to the first stator 210a using bolts. Those skilled in the art will appreciate the various ways of attaching components to withstand high temperatures.

The temperature sensing device 300 comprises a surface acoustic wave (SAW) sensor element 302. In the example of Figure 3, the temperature sensing device also comprises a sensor antenna 304, which is electrically coupled to the SAW sensor element 302. The temperature sensing device 300 may be a passive device in that it does not require electrical power to operate. It will be understood that the SAW sensor element 302 works based on SAWs generated in the SAW sensor element 302. For example, the SAW sensor element 302 comprises a transducer which converts an input signal (for example, an electrical signal) into a surface acoustic wave that resonates in the SAW sensor element 302. The SAW sensor element 302 also, for example, comprises a transducer to convert the SAW into an output signal (for example, an output signal).

The temperature sensing device 300 may be configured to withstand the harsh environment of the brake discs 202. For example, the temperature sensing device may be configured to withstand at least one of: a saw tooth shock profile of 6g at 20ms duration, a saw tooth shock profile of 55g at 30ms duration, a saw tooth shock profile of 70g at 0.4ms duration, a half-sine shock profile of 40g at 30ms duration, a half-sine shock profile of 50g at 0.5ms duration, and vibration of 50g at 2 kHz for a minimum duration of 3 hours. Vibrations and/ or shock testing may be performed in accordance with Radio Technical Commission for Aeronautics (RTCA) DO-160G.

It will be understood that the SAW sensor element 302 works based on SAWs generated in the SAW sensor element 302. For example, the SAW sensor element 302 comprises a transducer which converts an input signal (for example, an electrical signal) into a surface acoustic wave that resonates in the SAW sensor element 302. The SAW sensor element 302 also, for example, comprises a transducer to convert the SAW into an output signal (for example, an output signal). Physical properties (such as temperature, for example) of the SAW sensor element may be determined based on the output signal.

The input signal may be referred to as an interrogation signal. That is because the interrogation signal causes the output signal based on which, for example, temperature can be determined. The interrogation signal therefore acts to query the SAW sensor element 302 to provide an output signal. The interrogation signal may be wirelessly received by the temperature sensing device 300. The output signal may be wirelessly transmitted by the temperature sensing device 300.

The SAW sensor element 302 comprises one or more interdigital transducers (IDTs). The IDTs are for converting between a SAW and, for example, an electrical signal. The functioning of an IDT is described further below. In some examples, the SAW sensor element 302 is a one-port SAW sensor. In such examples, the SAW sensor element 302 has one IDT. For example, the SAW sensor element 302 may have one IDT and reflectors either side of the IDT to reflect the SAW. In such examples, the one IDT converts an input signal into a SAW and also converts the SAW back into an electrical signal as a response (output) signal.

In some examples, the SAW sensor element 302 is a two-port SAW sensor. In such examples, the SAW sensor element 302 comprises two IDTs spaced apart from one another. There is an input IDT which converts an input signal into a SAW. The SAW travels from the input IDT to an output IDT. The output IDT converts the SAW into an output signal. Those skilled in the art will appreciate the various configurations of a SAW sensor element.

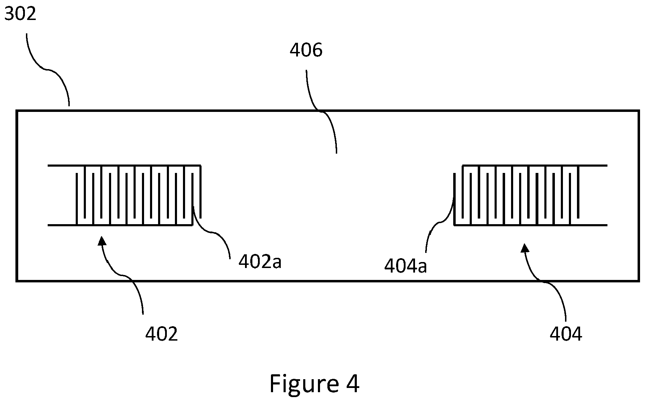

Figure 4 illustrates a particular example of the SAW sensor element 302. In this example, the SAW sensor element 302 is a two-port SAW sensor, and comprises an input IDT 402 and an output IDT 404. Each of the input IDT 420 and the output IDT 404 comprises two interlocking comb-shaped arrays of electrodes, deposited on the surface of a piezoelectric substrate 406 to form a periodic structure. The electrodes may be metallic electrodes, for example. In this example, the input IDT 402 comprises a first periodic electrode structure 402a and the output IDT 404 comprises a second periodic electrode structure 404a. The input IDT 402 is provided at a first location of the piezoelectric substrate 406 and the output IDT 404 is provided at a second location of the piezoelectric substrate 406 such that there is a space between the input IDT 402 and the output IDT 404.

Those skilled in the art will appreciate that a piezoelectric material can generate an electric charge in response to mechanical stress. Furthermore, a piezoelectric material can deform and generate mechanical stress in response to an applied electric field. An alternating electrical signal can be applied to the input IDT 402 such that adjacent electrodes have opposite polarities and the polarity of each electrode alternates according to the applied alternating electrical signal.

Such a signal causes there to be a region of compressive stress next to a region of tensile stress, and each region alternates between compressive and tensile stress. As a result of this alternating compressive and tensile stress, there is generated a mechanical wave. This mechanical wave is what is referred to as a surface acoustic wave (SAW), as described above. SAWs in the SAW sensor element 302 are generated at the resonant frequency of the SAW sensor element 302.

In the example of Figure 4, the SAW travels from the input IDT 402 to the output IDT 404. The alternating regions of compressive and tensile stress caused by the SAW at the output IDT cause there to be alternating electric fields. These alternating electric fields generate an electrical signal in the output IDT such that the polarities of adjacent electrodes of the output IDT 404 alternate in the manner described above for the input IDT 402. In other words, an electrical signal is generated at the output IDT 404 by the reverse of the process which took place at the input IDT 402 to generate the SAW from the input electrical signal.

As previously described, the physical properties (such as temperature, for example) of the SAW sensor element may be determined based on the output signal. The characteristics of the SAW in the SAW sensor element 302 depend on the physical properties of the SAW sensor element such as temperature. Therefore, by detecting the characteristics of the SAW, the temperature of the SAW sensor element 302 can be determined. For example, the characteristics of the SAW are detected using the output signal generated by the output IDT 404 in response to an interrogation signal received at the input IDT 402.

Various characteristics of the SAW may be detected. For example, a delay relating to the transmission of the interrogation signal and receipt of the output signal in response from the temperature sensing device 300, a phase shift response of the SAW sensor element 302, and/or a resonant frequency of the SAW sensor element 302 may be detected. For example, the frequency of the output signal corresponds to the frequency of the SAW and therefore the resonant frequency of the SAW sensor element 302. A desired physical property of the SAW sensor element 302 (such as temperature) may then be determined from the detected characteristic of the SAW sensor element 302.

A predefined relationship between the detected characteristic (for example, the resonant frequency) of the SAW sensor element 302 and the temperature of the SAW sensor element 302 may be stored in a computer readable memory (for example, in the computing system 106) on the aircraft 100, for example. The predefined relationship specifies what the detected characteristic of the SAW sensor element 302 is expected to be at various different temperatures (for example, obtained from calibration and/or testing of the SAW sensor element 302). For example, from a given resonant frequency, the temperature of the SAW sensor element 302 is determined from the predefined relationship. The predefined relationship may be stored in the form of a look-up table, rule, correlation equation, graph, etc.

The predefined relationship may be determined by performing calibration or other test on the SAW sensor element 302. For example, test may be performed to cause the SAW sensor element 302 to resonate at different temperatures and determine the resonant frequencies at those temperature in order to establish the predefined relationship.

As previously described, the temperature sensing device 300 is attached to one of the brake discs 202. In the example of Figure 2, the temperature sensing device is attached to one of the stators 210. Therefore, the temperature of the SAW sensor element 302 corresponds to the temperature of the brake disc to which it is attached.

The interrogation signal may be wirelessly received by the temperature sensing device 300. The temperature sensing device 300 may comprise (as in the example of Figure 3) a sensor antenna 304 configured to wirelessly receive the interrogation signal, and supply the interrogation signal to the SAW sensor element 302. For example, the sensor antenna 304 receives the interrogation signal in the form of radio waves and converts the radio waves into an electrical signal. The SAW sensor element may be configured to, responsive to the interrogation signal, output a signal as a response (the described output signal), the output signal indicative of the resonant frequency of the SAW sensor element 302, to the sensor antenna 304. For example, the sensor antenna 304 may be configured to wirelessly transmit the output signal. For example, the sensor antenna 304 converts the electrical output signal into radio waves.

For example, the sensor antenna 304 supplies the interrogation signal to the input IDT 402 of the SAW sensor element 302. The interrogation signal as received at the input IDT 402 is an alternating electrical signal which causes the input IDT 402 to generate a SAW as previously described. The SAW sensor element 302 provides an output signal (generated by the output IDT 404 as previously described). For example, the output signal is supplied from the output IDT 404 to the sensor antenna 304. The sensor antenna 304 transmits the output signal. For example, the sensor antenna 304 is electrically coupled to the input IDT 402 and the output IDT 404. The origin of the interrogation signal and the components which receive and process the output signal are described later.

A change in temperature of the SAW sensor element 302 causes a change in the resonant frequency. For example, as the temperature of the SAW sensor element 302 increases, the resonant frequency of the SAW sensor element decreases. The frequency of the SAW depends on the spacing between the electrodes of the IDTs. The spacing between adjacent electrodes is referred to as the pitch of the IDT in question. The pitch determines the wavelength of the SAW generated by the IDT. The pitch is equal to half of the wavelength of the SAW generated by the IDT. Therefore, the desired frequency resonant frequency of the SAW sensor element

The frequency of the SAW depends on the propagation velocity of the SAW and the wavelength of the SAW according to Equation (1) below.

$$f = \frac{V_s}{\lambda} \tag{1}$$

In Equation (1), f represents the frequency of the SAW, $V_s$ represents the propagation velocity of the SAW in the SAW sensor element in question, and $\lambda$ represents the wavelength of the SAW.

The frequency of the SAWs generated in the SAW sensor element 302 can be referred to as the resonant frequency of the SAW sensor element. It will be appreciated that, for a given propagation velocity of the SAW in the SAW sensor element 302, the resonant frequency of the SAW sensor element 302 can be configured by selecting an appropriate pitch for the IDTs of the SAW sensor element 302.

The temperature of the SAW sensor element 302 may be determined by detecting the resonant frequency of the SAW sensor element 302 as indicated by the output signal.

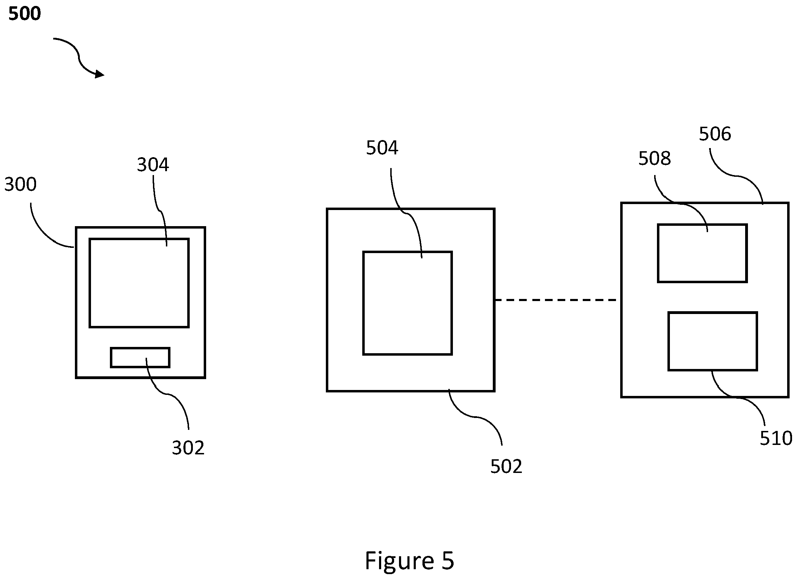

Figure 5 schematically illustrates an example of a temperature sensing system 500 for sensing aircraft wheel brake temperature. The temperature sensing system 500 comprises the temperature sensing device 300 according to any of the described examples. The temperature sensing system 500 also comprises a wireless relay device 502 for delivering the interrogation signal for wirelessly interrogating the SAW sensor element 302. The wireless relay device 502 delivers the interrogation signal by wirelessly transmitting the interrogation signal to the temperature sensing device 300. The wireless relay device 502 also wirelessly receives the described output signal. The wireless relay device 502 is hereafter simply referred to as the relay 502.

In some examples, the relay 502 comprises a relay antenna 504. The relay antenna wirelessly transmits the interrogation signal and wirelessly receives the output signal. In some such examples, the relay 502 is simply a device for communicating wirelessly with the temperature sensing device 300. As described, the temperature sensing device 300 may be attached to one of the brake discs 202. The relay 502 may be attached to a component of the brake 200 or wheel 104 such that it can wirelessly communicate with the temperature sensing device 300 attached to a brake disc. For example, the relay 502 may be mounted so as to maintain line of sight with the temperature sensing device 300.

The wireless communication between the temperature sensing device 300 and the relay 502 can be implemented, for example, by electromagnetic, inductive or capacitive coupling of the relay 502 to the temperature sensing device 300. For example, each of the sensor antenna 304 and the relay antenna 504 may be configured to convert electrical signals to radio waves and vice versa, with the radio waves being transmitted between the respective antennas.

In some examples, the temperature sensing device 300 is attached to the first stator 210a and the relay 502 is attached to the torque tube 218 to which the first stator 210a is keyed. In such examples, the relay 502 is attached to the torque tube at a position so as to be in the line of sight of the temperature sensing device 300 on the first stator 210a. In other examples, the temperature sensing device 300 may be attached to a different brake disc or a different component of the brake 200, and the relay 502 may be attached to an appropriate location to maintain line of sight with the temperature sensing device 300.

The temperature sensing system 500 may comprise an interrogation apparatus 506. The interrogation apparatus 506 may form part of the computing system 106 of the aircraft 100. In such examples, the interrogation apparatus 506 forms a communication link (which may be wireless or wired) with the relay 502. The interrogation apparatus 506 comprises a controller 508 configured to provide the interrogation signal. For example, the controller 508 may provide the interrogation signal based on a command signal received from another component of the computing system 106. The command signal may comprise the interrogation signal, and the interrogation signal may simply be retransmitted towards to the relay 502. In other examples, the command signal may be an instruction for the controller 508 to generate the interrogation signal.

In the example of Figure 5, the interrogation apparatus 506 comprises a transceiver 510 for transmitting the interrogation signal to the relay 502 and receiving the described output signal from the relay 502. The transceiver 510 may communicate with the relay 502 via a wired communication link or wirelessly. For example, for wireless communication, respective antennas may be provided as part of the relay 502 and the interrogation apparatus 506.

The SAW sensor element 302 has a resonant frequency within a frequency range between 175 megahertz (MHz) and 190MHz at a predetermined temperature. A frequency range between 175MHz and 190MHz is not limited to a range having 175MHz as a lower limit and 190MHz as an upper limit. For example, the frequency range may be any range that falls between 175 MHz and 190 MHz (for example, 175 MHz to 180 MHz, 176 MHz to 188 MHz, 180 MHz to 190 MHz, etc.). In some examples, the resonant frequency of the SAW sensor element 302 is within the frequency range when the temperature of the SAW sensor element 302 is within a predetermined temperature range (for example, 24°C to 1000°C).

As previously described, in some examples, there may be a wired connection between the relay 502 and other components of the aircraft with which the relay 502 communicates. The following description relates to a cable structure which includes a plurality of wires and/or cables. The cable structure is to carry signals to and from a component of a temperature sensing arrangement in an aircraft wheel brake. For example, the temperature sensing arrangement comprises the temperature sensing device 300 and the relay 502. For example, the described cable structure is used to carry the interrogation signal to the relay and carry the output signal from the relay 502 to other components.

In some examples, there is provided a cable structure comprising elongate elements. The elongate elements include a plurality of cables and/or wires, one or more ceramic spacer layers, a ceramic cover layer and a metallic layer, for example. The metallic layer is configured to surround the one or more ceramic spacer layers and the ceramic cover layer.. For example, the cable structure is for protecting the plurality of wires and/or cables from a harsh environment. For example, the cable structure provides protection from very high temperatures that may occur in the harsh environment. The wires and/or cables are for carrying a signal to and/or from a component present in a harsh temperature environment (e.g., the described relay 502) on an aircraft.

The cable structure may comprise a plurality of wires. For example, the cable structure may be used to cover and provide protection to a plurality of wires. In some examples, each wire comprises a protective sheath formed from an insulator material. In some examples, the cable structure may comprise a plurality of cables. For example, the cable structure may be used to provide thermal protection to a plurality of coaxial cables. The cable structure may comprise a combination of wires and cables, as desired. The cable structure may comprise wires and/or cables which couple to electronic component in harsh environments and may protect those wires and/or cables from thermal damage, for example.

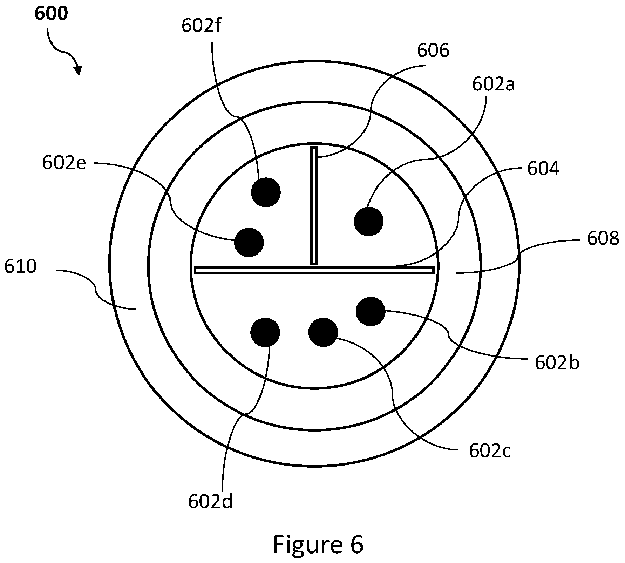

Figure 6 is a simplified schematic cross-sectional view of a first cable structure 600, according to examples. The first cable structure 600 comprises the following elongate elements. The first cable structure 600 comprises a plurality of wires and/or cables 602a to 602f. The first cable structure 600 comprises one or more ceramic spacer layers 604, 606. The first cable structure 600 comprises a first ceramic cover layer 608. The first cable structure 600 comprises a metallic layer 610 configured to surround the one or more ceramic spacer layers 604, 606 and the ceramic over layer 408. In this example, the first cable structure as a whole serves to provide thermal protection to the plurality of wires and/or cables 602a to 602f therein. As previously described, in some examples, the first cable structure 600 comprises a plurality of wires. For brevity, in the following description, it is assumed that the first cable structure 600 is used to cover a plurality of wires. Those skilled in the art will appreciate that a single conductor which may be covered in an insulator material may constitute a wire. However, it will be appreciated that the following description may be applied to a plurality of cables (for example, coaxial cables) or a combination of wires and cables. Those skilled in the art will appreciate that cables comprise more than one elongate conductor.

For example, some of the plurality of wires 602a to 602f may carry a signal (for example, the interrogation signal) to the relay 502. For example, some of the wires 602a to 602f may carry the output signal from the relay 502 to the interrogation apparatus 506. In some examples, some of the wires 602a to 602f are for providing redundant connections. For example, if the primary wire intended to carry the interrogation signal to the relay 502 fails, a different one of the wires 602a to 602f may be used to deliver the interrogation signal to the relay 502.

A particular number of wires is shown in Figure 6, for the purpose of illustrating the arrangement of the first cable structure 600. The first cable structure 600 may be used to protect any number of wires according to the desired application. For example, the number of wires varies according to which sensor, computing component, electronic circuit board and the like is to be coupled to and which signals are intended to be carried.

In the example of Figure 6, the first cable structure 600 comprises a first ceramic spacer layer 604 and a second ceramic spacer layer 606. In some examples, the one or more ceramic spacer layers separate one or more of the plurality of wires 602a to 602f from the remainder of the plurality of wires.

For example, the one or more ceramic spacer layers may separate the wires according to any kind of grouping according to the application. For example, the wires may be separated according to the electronic component to which an electrical connection is to be made for communicating a signal. Those skilled in the art will appreciate that various different groupings of a number of different wires may be used according to the specific application.

In the example of Figure 6, the first and second ceramic spacer layers 604, 606 together function to separate a first wire 602a from the other wires. In this example, the first ceramic spacer layer 604 functions to separate second, third and fourth wires 602b, 602c and 602d from the remainder of the plurality of wires. In this example, the second ceramic spacer layer 606 separates fifth and sixth wires 602c and 602b from the first wire 602a. Furthermore, the second ceramic spacer layer 606 and the first ceramic spacer layer 604 function together to separate the fifth and the sixth wires 602e and 602f from all the other wires. Any number of ceramic spacer layers may be included according to the intended application. For example, in some cases, a large number of wires may be desired and a separation between certain of those wires may be desired. For example, the wires of the first cable structure 600 may carry a number of signals where it is desired that the likelihood of interference between said signals be kept low. A number of ceramic spacer layers may be included in accordance with such desired applications.

The first cable structure 600 comprises a first ceramic cover layer 608. The first ceramic cover layer 608 surrounds the plurality of wires 602a to 602f and the one or more ceramic spacer layers 604, 606. The first ceramic cover layer 608 acts as a sheath for the components it surrounds. As discussed hereafter, the first ceramic cover layer 608 also provides protection from high temperatures.

In some examples, the cross-section section of the ceramic cover layer is a circle as in the case of the first ceramic cover layer 608 in Figure 6. In this example therefore, the first ceramic cover layer 608 encloses (in the sense of the cross section shown in Figure 6) the plurality of wires and the one or more ceramic spacer layers. Other examples are described later.

The first cable structure 600 comprises a metallic layer 610 configured to surround the one or more ceramic spacer layers and the ceramic cover layer. For example, the metallic layer 610 acts as a sheath which is provided around the first ceramic cover layer 608. The metallic layer 610 may comprise a metal suitable of the harsh environments that the first cable structure 600 is intended for. In some examples, the metallic layer 610 may function as a shield to block signal interference.

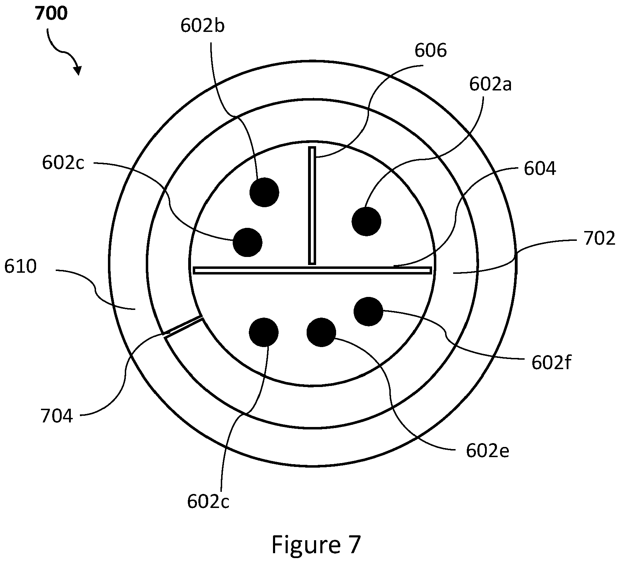

In some examples, the cross section of the ceramic cover layer is an arc. For example, the cross section of the ceramic cover layer is an arc which almost forms a complete circle. Figure 7 is a simplified schematic cross-sectional view of a second cable structure 700, according to examples. The second cable structure 700 is similar to the previously described first cable structure 700 with the difference being that the second cable structure 700 comprises a second ceramic cover layer 702 different to the first ceramic cover layer 608. The components which are the same between the first cable structure 600 and the second cable structure 700 are indicated by the same reference numerals in Figure 7 as in Figure 6.

The second ceramic cover layer 702 of Figure 7 does not form a closed loop in cross-section. Instead, the second ceramic cover layer 702 of the second cable structure 700 comprises a gap 704. In this example, the metallic layer 610 is configured to hold the one or more ceramic layers 604, 606 and the second ceramic cover layer 702. For example, when the second ceramic cover layer 702 is not installed as part of the second cable structure 700 (in other words, the second ceramic cover layer 702 in isolation), the gap 704 may be larger than when the second ceramic cover layer 702 is installed in the second cable structure 700. For example, the arranging of the metallic layer 610 around the outside of the second ceramic cover layer 702 may force the gap 704 closed. In this manner, the metallic layer 610 may hold the layers which it covers together. Provision of the gap 704 may aid in assembling the second cable structure 700, for example.

Various components of the described cable are described as ceramic. Such components comprise a ceramic material. For example, one or more of the described ceramic components comprise Alumina. The ceramic material used is a material that can withstand high temperatures likely to occur in the harsh environment for which the descried cable is intended. For example, a ceramic material may be selected which is configured to function at temperatures above 1000°C.

The cable structure according to any of the described examples provides temperature protection to the wires and/or cables housed within the cable structure. For example, wires and/or cables for supplying the interrogation signal to the relay 502 may be provided as part of the described cable structure to protect the wires and/or cables from becoming damaged due to the heat produced during braking. For example, when the relay is mounted to the torque in the line of sight of the first stator 210a, the described cable structure provides protection from the heat produced by the stator and the other brake discs of the brake 200.

The cable structure according to any of the described examples may be used to protect wires and/or cable in other harsh environments of the aircraft 100 such as in the vicinity of the jet engines of the aircraft 100. In some examples, there is provided an aircraft wheel brake comprising the cable structure according to any of the described examples. In some examples, there is provided an aircraft comprising such an aircraft wheel brake.

Certain components are described as being electrically coupled to other components. In some examples, components may be electrically coupled by virtue of an electrical connection. Those skilled in the art will appreciate that electronic components may also be capacitively or inductively coupled, for example. The type of electrical coupling depends on the characteristics of the electronic components and the particular application.

It should be noted that the Figures show simplified schematic views for the purpose of illustration. The Figures are intended to illustrate the described concepts and are not intended to convey dimensions, relative sizes of components and the like. In some cases, certain components are not shown for simplicity, as will be appreciated by those skilled in the art.

Although the invention has been described above with reference to one or more preferred examples, it will be appreciated that various changes or modifications may be made without departing from the scope of the invention as defined in the appended claims.

**Claims**

1. A cable structure to carry signals to and from a component of a temperature sensing arrangement in an aircraft wheel brake, the cable structure comprising elongate elements including a plurality of cables and/or wires, one or more ceramic spacer layers, a ceramic cover layer and a metallic layer surrounding the one or more ceramic spacer layers and the ceramic cover layer.

2. The cable structure according to claim 1, wherein:

   a cross section of the ceramic cover layer is an arc; and
   the metallic layer is configured to hold the one or more ceramic spacer layers and the ceramic cover layer.

3. The cable structure according to claim 1, wherein:
   a cross section of the ceramic cover layer is a circle.

4. The cable structure according to any one of the preceding claims, wherein:
   the one or more ceramic spacer layers separate one or more of the plurality of wires and/or cables from the remainder of the plurality of wires and/or cables.

5. The cable structure according to any one of the preceding claims, wherein:
   the cable structure is for providing thermal protection to the plurality of cables and/or wires.

6. An aircraft wheel brake comprising the cable structure according to any one of claims 1 to 5.

7. The aircraft wheel brake according to claim 6, wherein:
   the cable structure is electrically coupled to a wireless relay device for wirelessly transmitting an interrogation signal to a temperature sensing device and wirelessly receiving an output signal from the temperature sensing device.

8. An aircraft comprising the aircraft wheel brake according to claim 7.

Figure 1

Figure 2

EP 4 187 557 A1

Figure 3

EP 4 187 557 A1

302

406

404

404a

402a

402

Figure 4

Figure 5

EP 4 187 557 A1

Figure 6

EP 4 187 557 A1

Figure 7

EP 4 187 557 A1

Europäisches
Patentamt

European
Patent Office

Office européen
des brevets

# EUROPEAN SEARCH REPORT

**Application Number**

EP 22 21 0149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 214 175 761 U (SHENYANG BEIYANG CABLE MFT CO LTD) 10 September 2021 (2021-09-10) | 1,2,4-8 | INV. H01B11/06 H01B7/29 |
| Y | * page 4, last paragraph of the machine translation; page 5, 9th paragraph of the machine translation; page 6, 5th paragraph of the machine translation; figures 1, 2 * | 3 | |
| Y | US 5 834 117 A (ONISHI YASUHIKO [JP]) 10 November 1998 (1998-11-10) | 3 | |
| A | * column 3, line 1 - line 4 * | 6-8 | |
| A | US 2016/236019 A1 (FYFE EDWARD ROBERT [US]) 18 August 2016 (2016-08-18) * paragraph [0034]; figure 1 * | 1-8 | |
| A | US 10 249 410 B1 (LANOE THIBAUT OSCAR [US] ET AL) 2 April 2019 (2019-04-02) * column 11, line 45 - line 50; figure 1 * | 1-8 | |

**TECHNICAL FIELDS SEARCHED (IPC)**

H01B

The present search report has been drawn up for all claims

| Place of search | Date of completion of the search | Examiner |
|---|---|---|
| The Hague | 6 April 2023 | Alberti, Michele |

EPO FORM 1503 03.82 (P04C01)

## ANNEX TO THE EUROPEAN SEARCH REPORT
## ON EUROPEAN PATENT APPLICATION NO.

EP 22 21 0149

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2023

| Patent document cited in search report | | Publication date | Patent family member(s) | | Publication date |
|---|---|---|---|---|---|
| CN 214175761 | U | 10-09-2021 | NONE | | |
| US 5834117 | A | 10-11-1998 | DE | 69607104 T2 | 14-12-2000 |
| | | | EP | 0773557 A2 | 14-05-1997 |
| | | | JP | 3289581 B2 | 10-06-2002 |
| | | | JP | H09139118 A | 27-05-1997 |
| | | | US | 5834117 A | 10-11-1998 |
| US 2016236019 | A1 | 18-08-2016 | CA | 2916515 A1 | 10-03-2017 |
| | | | SG | 10201510728T A | 27-04-2017 |
| | | | US | 2016236019 A1 | 18-08-2016 |
| | | | US | 2018214721 A1 | 02-08-2018 |
| | | | US | 2020215365 A1 | 09-07-2020 |
| US 10249410 | B1 | 02-04-2019 | NONE | | |

EPO FORM P0459

For more details about this annex : see Official Journal of the European Patent Office, No. 12/82